# EUROPEAN PATENT APPLICATION

(11) **EP 4 838 289 A1**
(43) Date of publication of application: **11.11.2026**
(21) Application number: 24960985.0
(22) Date of filing: 13.11.2024
(51) Int. Cl.: G02B 30/60, G02B 27/09, G02B 7/18

(54) **DISPLAY DEVICE**

(71) Applicant: LG Electronics Inc., Yeongdeungpo-gu Seoul 07336 (KR)
(72) Inventor: JEON, Yonggu, Seoul 06772 (KR); THO, Gihoon, Seoul 06772 (KR); KIM, Jinyeop, Seoul 06772 (KR); JO, Juung, Seoul 06772 (KR); KIM, Doyoung, Seoul 06772 (KR)
(74) Representative: Vossius & Partner Patentanwälte Rechtsanwälte mbB
(86) International application number: PCT/KR2024/017902
(87) International publication number: WO 2026/105898

(57) **Abstract**

The present embodiment includes a display unit configured to emit a first image to a first region among a plurality of regions, and emit a second image to a second region among the plurality of regions; a first prism configured to reflect the first image emitted through the first region; and a second prism configured to reflect the second image emitted through the second region, and through which the first image reflected by the first prism is transmitted, wherein the first image and the second image are superimposed and displayed.

## Description

### [Technical Field]

The present invention relates to a display apparatus.

### [Background Art]

A display device is an output device that visually displays information for visual or stereoscopic reception, storage, and transmission.

The display apparatus may be installed in a vehicle and visually deliver information to an occupant.

Korean Patent Registration Publication No. 10-2664395 (published on May 08, 2024) discloses a see-through display apparatus using a prism, and the see-through display apparatus includes a display element; an optical combiner configured to emit a combined image obtained by combining a first image from the display element and a second image from a path different from the first image; and a noise reduction prism disposed between the display element and the optical combiner, and configured to convert a path of effective light within a predetermined angle range among light of the first image in a direction incident on the optical combiner, and convert a path of noise light within the remaining angle range in a direction not incident on the optical combiner.

### [Disclosure]

### [Technical Problem]

An object of the present embodiment is to provide a display apparatus having a simple configuration, a minimized volume, and capable of implementing a three-dimensional stereoscopic image.

The other object of the present embodiment is to provide a display apparatus capable of providing a three-dimensional floating image having no sense of heterogeneity caused by a bezel.

### [Technical Solution]

A present embodiment comprises a display unit configured to emit a first image to a first region among a plurality of regions, and emit a second image to a second region among the plurality of regions; a first prism configured to reflect the first image emitted through the first region; and a second prism configured to reflect the second image emitted through the second region, and through which the first image reflected by the first prism is transmitted, the first image and the second image are superimposed and displayed.

The first prism may comprise a first incident surface through which the first image emitted through the first region is incident; a first inclined surface configured to reflect the first image incident through the first incident surface toward the second prism; and a second inclined surface through which the first image reflected by the first inclined surface is emitted.

The first inclined surface and the second inclined surface may be spaced apart from each other.

The first inclined surface and the second inclined surface may be parallel to each other.

An angle between the first inclined surface and the first incident surface may be an acute angle.

An angle between the second inclined surface and the first incident surface may be an obtuse angle.

The second prism may comprise a second incident surface through which the second image emitted through the second region is incident; a third inclined surface configured to reflect the second image incident through the second incident surface, and through which the first image reflected by the first inclined surface is transmitted; and an emission surface through which the second image reflected by the third inclined surface and the first image transmitted through the second inclined surface are emitted.

The third inclined surface may be parallel to the first inclined surface.

An angle between the third inclined surface and the second incident surface is an acute angle.

The acute angle may be 40° to 50°.

A transmittance of the third inclined surface is 40% to 50%.

A light absorptance of the third inclined surface is less than 10%.

A polarization deviation of the third inclined surface is less than 6%.

The second inclined surface and the third inclined surface may be bonded by a bond.

A refractive index of the bond is 1.46 to 1.56.

The display apparatus may further comprise a damping member configured to cover the display unit and on which the first prism and the second prism are seated.

### [Advantageous Effect]

According to the present embodiment, a three-dimensional stereoscopic image can be implemented with a simple structure of a display unit, a first prism, and a second prism, the configuration is simple, and the volume can be minimized.

In addition, since the first image and the second image are viewed through the prisms, there is no sense of heterogeneity caused by a mechanical bezel, and a three-dimensional floating image having a sense of distance can be displayed.

In addition, the second inclined surface of the first prism and the third inclined surface of the third prism are bonded by a bond, such that the first prism and the second prism can be integrated, and assembly of the display apparatus is easy.

In addition, since a refractive index of the bond is 1.46 to 1.56, which is similar to a refractive index of the first prism, straightness of light can be secured.

In addition, the display unit can be protected by the damping member, and damage generated when the prism and the display unit are brought into direct contact can be minimized.

### [Description of Drawings]

FIG. 1 is a perspective view illustrating an example of a display apparatus according to the present embodiment,
FIG. 2 is a cross-sectional view illustrating an example of a display apparatus according to the present embodiment,
FIG. 3 is a view illustrating an optical path of an example of a display apparatus according to the present embodiment,
FIG. 4 is a side view illustrating a first prism and a second prism of an example of a display apparatus according to the present embodiment,
FIG. 5 is a perspective view illustrating an optical path of an example of a display apparatus according to the present embodiment,
FIG. 6 is a plan view illustrating an emission surface of the display unit shown in FIG. 3,
FIG. 7 is a view illustrating a state in which a first image and a second image are reflected by prisms in an example of a display apparatus according to the present embodiment,
FIG. 8 is a view illustrating a state in which a first image and a second image appear overlapped in an example of a display apparatus according to the present embodiment,
FIG. 9 is a perspective view illustrating the other example of a display apparatus according to the present embodiment,
FIG. 10 is a cross-sectional view illustrating the other example of a display apparatus according to the present embodiment,
FIG. 11 is a perspective view illustrating a display unit and a prism of the other example of a display apparatus according to the present embodiment,
FIG. 12 is a view illustrating an optical path of the other example of a display apparatus according to the present embodiment,
FIG. 13 is a bottom view illustrating an emission surface of the display unit shown in FIG. 12.

### [Best Mode]

Hereinafter, specific embodiments of the present invention will be described in detail with reference to the drawings.

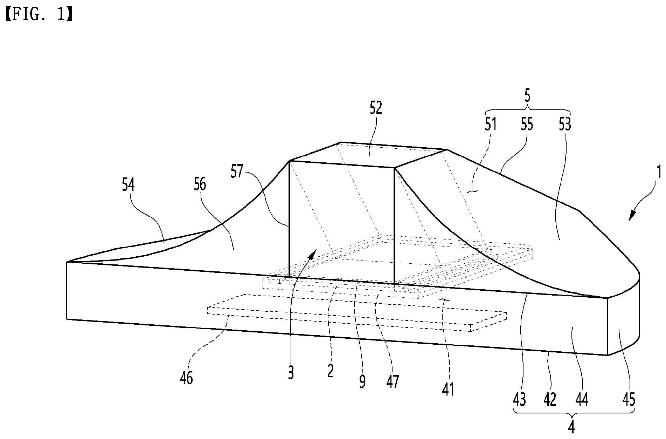

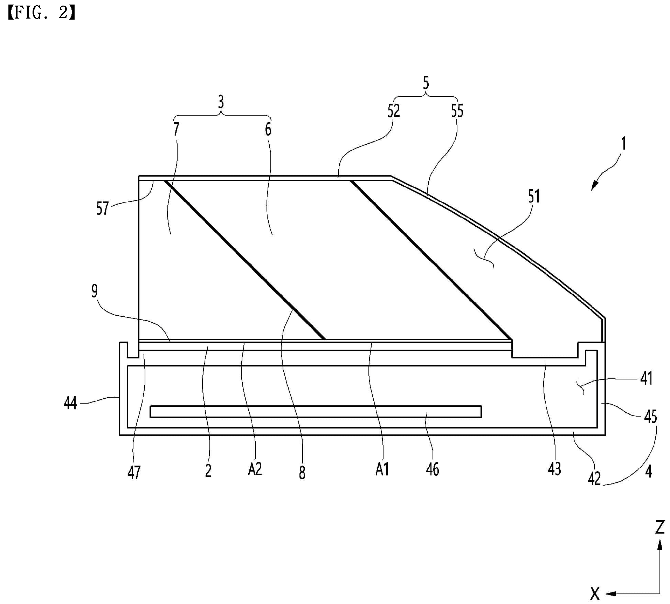

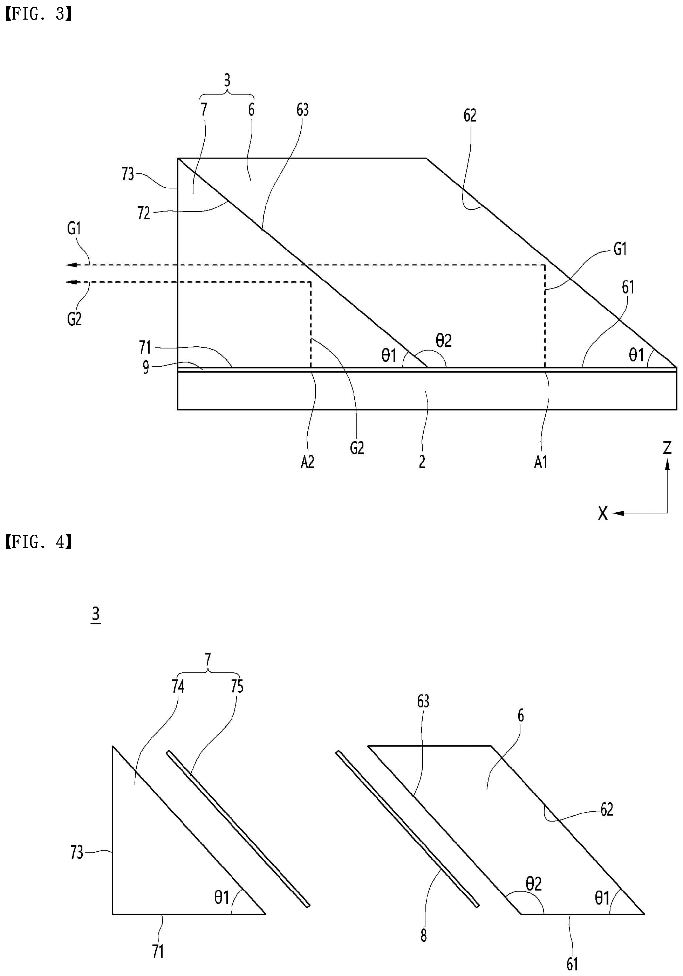

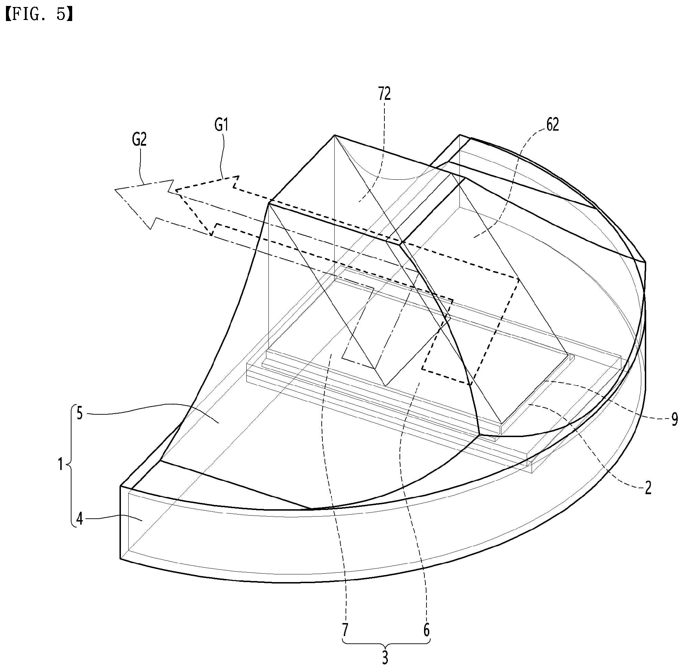

FIG. 1 is a perspective view illustrating an example of a display apparatus according to the present embodiment, FIG. 2 is a cross-sectional view illustrating an example of a display apparatus according to the present embodiment, FIG. 3 is a view illustrating an optical path of an example of a display apparatus according to the present embodiment, FIG. 4 is a side view illustrating a first prism and a second prism of an example of a display apparatus according to the present embodiment, and FIG. 5 is a perspective view illustrating an optical path of an example of a display apparatus according to the present embodiment.

An example of a display apparatus may include a housing 1, a display unit 2, and a prism 3.

The housing 1 may form an exterior appearance of an example of the display apparatus. The housing 1 may be disposed outside the display unit 2 and the prism 3. The housing 1 can protect the display unit 2 and the prism 3.

The housing 3 may be configured as an assembly of a plurality of members.

The housing 3 may include a lower housing 4 and an upper housing 5.

A lower space 41 may be formed inside the lower housing 4.

The lower housing 4 may include a lower plate 42, an upper plate 43, a front body 44, and a peripheral body 45.

The upper plate 43 may be spaced apart from the lower plate 42 in an up-down direction Z.

A power unit 46 configured to supply power to the display unit 2 may be accommodated in the lower space 41.

A display unit seating portion 47 on which the display unit 2 is seated may be formed in the lower housing 4.

The display unit seating portion 47 may be formed on the upper plate 43 of the lower housing 4. The display unit seating portion 47 may be a display unit accommodation portion configured to accommodate the display unit 2.

The upper housing 5 may be disposed above the lower housing 4.

An upper space 51 may be formed inside the upper housing 5.

The upper housing 5 may include a top cover portion 52.

The top cover portion 52 may cover an upper surface of the prism 3.

The upper housing 5 may include a pair of side cover portions 53 and 54.

The pair of side cover portions 53 and 54 may include a left cover portion 53 and a right cover portion 54.

The left cover portion 53 may extend from a left end of the top cover portion 52 to a left side of the lower housing 4.

The left cover portion 53 may be concave.

The right cover portion 54 may extend from a right end of the top cover portion 52 to a right side of the lower housing 4.

The right cover portion 54 may be concave.

The upper housing 5 may further include a rear cover portion 55.

The rear cover portion 55 may extend from a rear end of the top cover portion 52 to the peripheral body 45 of the lower housing 4.

The upper housing 5 may further include a front cover portion 56.

An opening 57 may be formed in the upper housing 5.

The opening 57 may be formed on a front surface of the upper housing 5. The opening 57 may be opened in a front-rear direction X at the front cover portion 56.

The display unit 2 may emit an image. The display unit 2 may output an image toward the prism 3.

The display unit 2, as an image generation unit, may be a display device capable of generating image light by controlling electrical signals, such as an LCD (Liquid Crystal Display) or an OLED (Organic Light Emitting Diode) panel.

The display unit 2 may be disposed horizontally or substantially horizontally inside the housing 1. The display unit 2 may emit an image upward.

The display unit 2 may be seated on the display unit seating portion 47 formed in the lower housing 4.

The display unit 2 may include a plurality of regions A1 and A2. The plurality of regions A1 and A2 may be formed on an emission surface of the display unit 2.

The emission surface may be formed on an upper surface of the display unit 2.

The plurality of regions A1 and A2 may be divided on the emission surface of the display unit 2 in the front-rear direction X.

The plurality of regions A1 and A2 may include a first region A1 and a second region A2.

The first region A1 may be a region facing a first prism 6 among the prisms 3.

The first region A1 may be located rearward of the second region A2.

The second region A2 may be a region facing a second prism 7 among the prisms 3.

The display unit 2 may emit a first image G1 through the first region A1 among the plurality of regions A1 and A2.

The display unit 2 may emit a second image G2 through the second region A2 among the plurality of regions A1 and A2.

The display unit 2 may emit the first image G1 through the first region A1 and may emit the second image G2 through the second region A2.

The display unit 2 may emit the first image G1 and the second image G2 simultaneously. That is, the display unit 2 may emit the first image G1 through the first region A1 while emitting the second image G2 through the second region A2.

The first image G1 and the second image G2 may be identical images, or may be different images from each other.

The first image G1 and the second image G2 may respectively include different types of images.

One of the first image G1 and the second image G2 may include an image such as a picture, and the other of the first image G1 and the second image G2 may include an image such as a numeral or a character.

When the first image G1 includes an image such as a picture, the second image G2 may include an image such as a numeral or a character, and when the first image G1 includes an image such as a numeral or a character, the second image G2 may include an image such as a picture.

The display unit 2 may control an intensity luminance of a light source for each region A1 and A2. The display unit 2 may output the first image G1 having a first luminance to the first region A1, and may output the second image G2 having a second luminance to the second region A2. The first luminance may be equal to or different from the second luminance.

The display unit 2 may be provided as a single display unit or may be provided as a plurality of display units.

In one example of the display unit 2, a single display unit may output both the first image G1 incident on the first prism 6 and the second image G2 incident on the second prism 7.

In another example of the display unit 2, the number thereof may be the same as the number of prisms 3. Another example of the display unit 2 may include a first display unit configured to output the first image G1 to the incident surface 61 of the first prism 6, and a second display unit configured to output the second image G2 to the incident surface 71 of the second prism 7.

The present embodiment is not limited to the number of display units 2, and various modifications are possible.

The prism 3 may reflect the images G1, G2 emitted from the display unit 2.

In order to increase an efficiency (that is, an incident efficiency) with which the first image G1 and the second image G2 are incident on the prism 3, the prism 3 and the display unit 2 may be arranged in the up-down direction Z.

The prism 3 may be disposed above the display unit 2.

The prism 3 may have an incident surface facing the display unit 2. The incident surface of the prism 3 may be a lower surface of the prism 3.

The prism 3 may have an emission surface facing forward. The emission surface may be a front surface of the prism 3. The emission surface may be orthogonal to the incident surface.

The prism 3 may be provided in plural. Each of the plurality of prisms 3 may include an incident surface. Each of the plurality of prisms 3 may include an inclined surface configured to change an optical path of an image.

The plurality of prisms 3 may include a first prism 6 and a second prism 7.

The display unit 2 may emit a plurality of images G1 and G2 along the incident surfaces 61 and 71 of the plurality of prisms 3, respectively. The display unit 2 may output the first image G1 and the second image G2 along the incident surface 61 of the first prism 6 and the incident surface 71 of the second prism 7, respectively.

An example of the display apparatus may superimpose and display the plurality of images G1 and G2.

The first prism 6 may reflect the first image G1 emitted through the first region A1. The first prism 6 may reflect the first image G1 emitted through the first region A1 toward the opening 57.

The first image G1 reflected by the first prism 6 may be transmitted through the second prism 7.

The first image G1 reflected by the first prism 6 may be transmitted through the second prism 7 and then emitted through the opening 57.

The second prism 7 may reflect the second image G2 emitted through the second region A2. The second prism 7 may reflect the second image G2 emitted through the second region A2 toward the opening 57.

The first image G1 reflected by the first prism 6 and the second image G2 reflected by the second prism 7 may be displayed together, and the first image G1 and the second image G2 may overlap each other.

The first image G1 and the second image G2 may be emitted forward together, and the display apparatus may superimpose and display the first image G1 and the second image G2.

The first prism 6 may include a first incident surface 61, a first inclined surface 62, and a second inclined surface 63.

The first incident surface 61 may face the emission surface of the display unit 2. The first incident surface 61 may face the first region A1 of the emission surface of the display unit 2.

The first image G1 emitted through the first region A1 may be incident on the first incident surface 61.

The first incident surface 61 may be a lower surface of the first prism 6.

The first image G1 incident on the first incident surface 61 may be formed on the first inclined surface 62.

The first inclined surface 62 may reflect the first image incident on the first incident surface 61 toward the second prism 7. The first inclined surface 62 may change an optical path. The first inclined surface 62 may change a direction of the first image G1. The first inclined surface 62 may change an optical path in the up-down direction Z to the front-rear direction X. The first inclined surface 62 may change the first image G1 incident upward to a forward direction.

The first inclined surface 62 may be an inclined rear surface of the first prism 6.

The first inclined surface 62 and the first incident surface 61 may form an acute angle θ1.

The first image G2 reflected by the first inclined surface 62 may be emitted toward the second inclined surface 63.

The second inclined surface 63 and the first incident surface 61 may form an obtuse angle θ2.

The first inclined surface 62 and the second inclined surface 63 may be spaced apart from each other. The first inclined surface 62 and the second inclined surface 63 may be spaced apart in the front-rear direction X.

An example of the display apparatus can provide a sense of depth corresponding to a distance by which the first inclined surface 62 and the second inclined surface 63 are spaced apart.

The first inclined surface 62 and the second inclined surface 63 may be parallel to each other. The second inclined surface 63 may be inclined at the same angle as the first inclined surface 62.

The second inclined surface 63 may be inclined toward a front lower side.

The second inclined surface 63 may be an inclined front surface of the first prism 6.

The second prism 7 may include a second incident surface 71, a third inclined surface 72, and an emission surface 73.

The second incident surface 71 may face the emission surface of the display unit 2. The second incident surface 71 may face the second region A2 of the emission surface of the display unit 2.

The second image G2 emitted through the second region A2 may be incident on the second incident surface 71.

The second incident surface 71 may be a lower surface of the second prism 7.

The second image G2 incident on the second incident surface 71 may be formed on the third inclined surface 72.

The third inclined surface 72 may reflect the second image G2 incident on the second incident surface 71. The third inclined surface 72 may change an optical path. The third inclined surface 72 may change a direction of the second image G2. The third inclined surface 72 may change an optical path in the up-down direction Z to the front-rear direction X. The third inclined surface 72 may change the second image G2 incident upward to a forward direction.

The third inclined surface 72 may be an inclined rear surface of the second prism 7.

The third inclined surface 72 may be parallel to the first inclined surface 62. The third inclined surface 72 may be parallel to the second inclined surface 63. The third inclined surface 72 and the second inclined surface 63 may be inclined at the same angle.

The third inclined surface 72 may be integrated with the second inclined surface 63.

The third inclined surface 72 and the second incident surface 71 may form an acute angle θ1.

The second image G2 reflected by the third inclined surface 72 may be emitted toward the emission surface 73.

The emission surface 73 and the second incident surface 71 may be orthogonal to each other.

The emission surface 73 and the third inclined surface 72 may be spaced apart from each other. The emission surface 73 and the third inclined surface 72 may be spaced apart in the front-rear direction X.

The effect of a layered floating display can be optimized according to an angle, a reflection area, and a reflectance of the first inclined surface 62.

The effect of a layered floating display can be optimized according to an angle, a reflection area (transmission area), and a reflectance (transmittance) of the third inclined surface 72.

An acute angle θ1 may be 40° to 50°. A preferred example of the acute angle θ1 may be 45°.

The third inclined surface 72 may be a reflection surface configured to reflect the second image G2 forward and may be a transmission surface through which the first image G1 is transmitted forward.

The third inclined surface 72 may be a reflection and transmission surface.

The reflection and transmission surface may reflect the second image G2 in the up-down direction Z.

The first image G1 in the front-rear direction X may be transmitted through the reflection and transmission surface.

When the acute angle θ1 is 45°, a transmittance of the third inclined surface 72 may be 40% to 50%.

When the acute angle θ1 is 45°, a light absorptance of the third inclined surface 72 may be less than 10%.

When the acute angle θ1 is 45°, a polarization deviation of the third inclined surface 72 may be less than 6%.

Visible light having a wavelength of 430 to 670 nm may be transmitted through the third inclined surface 72.

The first image G1 reflected by the first inclined surface 62 may be transmitted through the second inclined surface 63 and the third inclined surface 72.

The second image G2 reflected by the third inclined surface 72 and the first image G1 transmitted through the second inclined surface 63 and the third inclined surface 72 may be emitted together toward the emission surface 73.

By the first prism 6 and the second prism 7 as described above, the display apparatus may be a layered floating display configured to display the first image G1 and the second image G2 in a floating manner while stacking the images in layers.

That is, the second prism 7 may be configured to transmit the first image G1 and reflect the second image G2.

A display size of the display apparatus can be optimized according to a distance between the display unit 2 and the first inclined surface 62 and a distance between the display unit 2 and the third inclined surface 72.

An image quality of the display apparatus can be determined according to surface treatment of the first inclined surface 62 and surface treatment of the third inclined surface 72.

The first region A1 may be a first display source, and the second region A2 may be a second display source.

An area of the first display source may be the same as an area of the second display source.

For example, when a length of the first region A1 in a left-right direction is 70 mm and a length of the first region A1 in the front-rear direction is 70 mm, an area of the first display source may be 4900 mm², and an area of the first inclined surface 62 may be approximately 6929.65 mm².

When a length of the second region A2 in the left-right direction is 70 mm and a length of the second region A2 in the front-rear direction is 70 mm, an area of the second display source may be 4900 mm², and an area of the third inclined surface 72 may be 6929.65 mm².

The angle of the first inclined surface 62, the angle of the third inclined surface 72, the length of the first region A1 in the left-right direction, the length of the first region A1 in the front-rear direction, the length of the second region A2 in the left-right direction, and the length of the second region A2 in the front-rear direction may be varied as necessary, and the display apparatus can be optimized.

The second prism 7 may include a prism body 74 and a deposition layer 75.

The prism body 74 may have an inclined rear surface, a vertical front surface, and a horizontal lower surface.

The second incident surface 71 may be the lower surface of the prism body 74.

The emission surface 73 may be the front surface of the prism body 74.

The deposition layer 75 may be deposited on the inclined rear surface of the prism body 74, and the deposition layer 75 deposited on the inclined rear surface of the prism body 74 may constitute the third inclined surface 72.

The first prism 6 and the second prism 7 may be bonded. The first prism 6 and the second prism 7 may be bonded by an optical bond.

The second inclined surface 63 and the third inclined surface 72 may be bonded by a bond 8.

The bond 8 may be bonded to the second inclined surface 63 of the first prism 6 and the deposition layer 75 of the second prism 7.

The first image G1 reflected forward by the first inclined surface 62 may be transmitted through the bond 8 and may be incident on the deposition layer 75.

An example of the bond 8 may be an optical bond.

It is preferable that the bond 8 has required physical properties including a refractive index similar to that of glass.

Each of the first prism 6 and the second prism 7 may be glass.

It is preferable that a refractive index of the bond 8 is equal to or similar to a refractive index of the first prism 6, and in this case, the bond 8 may secure a transmittance similar to that when the first image G1 passes through the first prism 6.

A refractive index of the bond 8 may be 1.46 to 1.56. A preferred refractive index of the bond 8 may be 1.51.

When the deposition layer 75 is deposited on the inclined rear surface of the prism body 74 and the second inclined surface 63 of the first prism 6 is bonded to the deposition layer 75 with the bond 8, manufacture of the prism 3 may be completed, and the prism 3 may be a beam splitter.

An example of the display apparatus may further include a damping member 9.

The damping member 9 may cover the display unit 2. The damping member 9 may cover the display unit 2 from above the display unit 2.

The damping member 9 may be transparent. An example of the damping member 9 may be a transparent film or a transparent plastic injection-molded product.

The first image G1 emitted from the display unit 2 may be transmitted through the damping member 9 and then may be incident on the first incident surface 61.

The second image G2 emitted from the display unit 2 may be transmitted through the damping member 9 and then may be incident on the second incident surface 71.

The prism 3 may be seated on the damping member 9.

The first prism 6 and the second prism 7 may be seated on the damping member 9.

The damping member 9 may be a seating member on which the prism 3 is seated. The damping member 9 may be a seating member on which a beam splitter is seated.

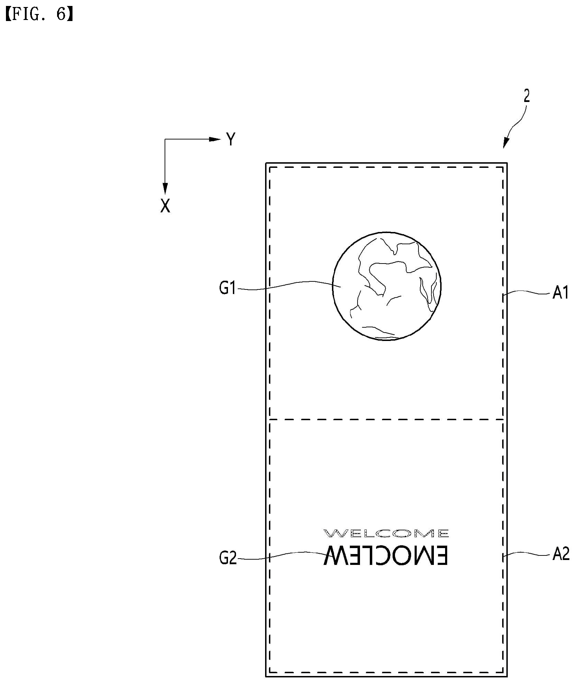

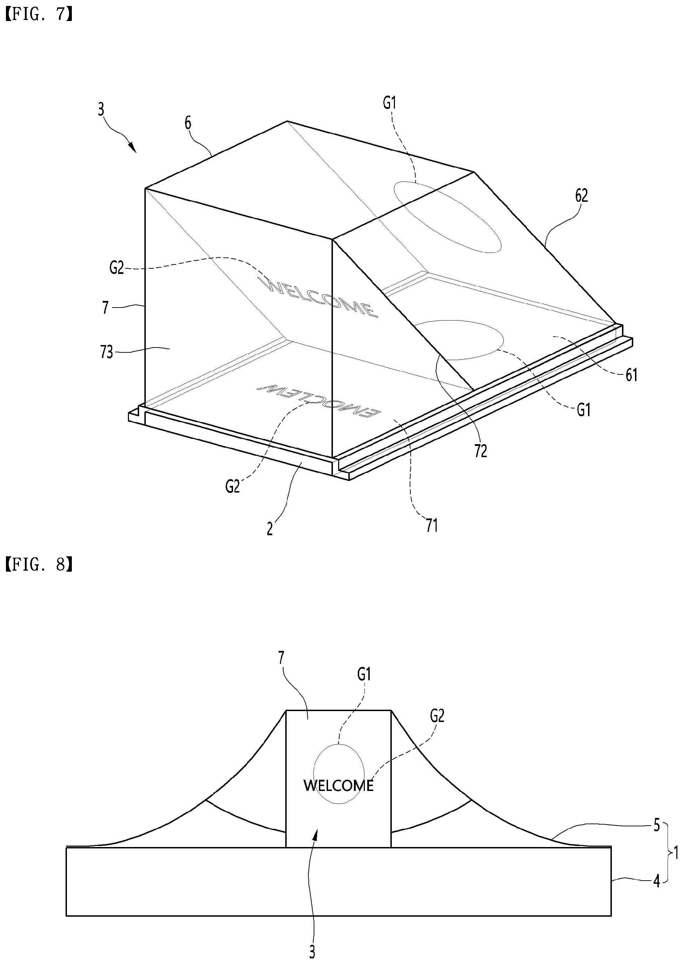

FIG. 6 is a plan view illustrating an emission surface of the display unit shown in FIG. 3, FIG. 7 is a view illustrating a state in which a first image and a second image are reflected by prisms in an example of a display apparatus according to the present embodiment, and FIG. 8 is a view illustrating a state in which a first image and a second image appear overlapped in an example of a display apparatus according to the present embodiment.

The display unit 2 of an example of the display apparatus may emit a plurality of images G1 and G2 along the incident surfaces 61 and 71 of the plurality of prisms 3. The display unit 2 of an example of the display apparatus may emit the first image G1 and the second image G1 together along the incident surfaces of the plurality of prisms 3.

As shown in FIG. 6, the display unit 2 may include a first region A1 located rearward among the emission surface, and a second region A2 located forward of the first region A1.

A distance between the second region A2 and the opening 57 may be shorter than a distance between the first region A1 and the opening 57.

As shown in FIG. 6, the display unit 2 may emit the first image G1 through the first region A1, and may emit the second image G2 through the second region A2.

The first image G1 emitted through the first region A1 of the display unit 2 may be incident on the first prism 6 and, as shown in FIG. 7, may be formed on the first inclined surface 62, and the second image G2 emitted through the second region A2 of the display unit 2 may be incident on the second prism 7 and, as shown in FIG. 7, may be formed on the third inclined surface 72 of the second prism 7.

The first image G1 formed on the first inclined surface 62 of the first prism 6 may be vertically inverted with respect to the first image G1 emitted to the first region A1 of the display unit 2.

The second image G2 formed on the third inclined surface 72 of the second prism 7 may be vertically inverted with respect to the second image G2 emitted to the second region A2 of the display unit 2.

In consideration that the first image G1 and the second image G2 are vertically inverted, when the display unit 2 outputs the images, the display unit 2 may display each of the first image G1 and the second image G2 by vertically inverting the same, as shown in FIG. 6.

The first image G1 formed on the first inclined surface 62 of the first prism 6 and the second image G2 formed on the third inclined surface 72 of the second prism 7 may be displayed to overlap forward, and as shown in FIG. 8, may be displayed like one image.

An occupant can view an image in which the first image G1 and the second image G2 are superimposed through the second prism 7.

The display unit 2 may control an intensity (luminance) of a light source for each region A1 and A2, and can control each of a luminance of the first image G1 reflected by the first inclined surface 62 and a luminance of the second image G2 reflected by the third inclined surface 72 of the second prism 7.

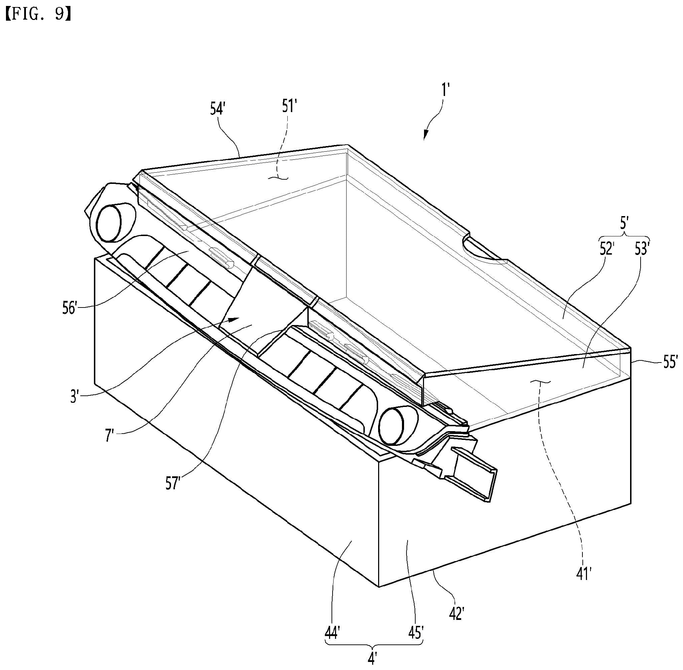

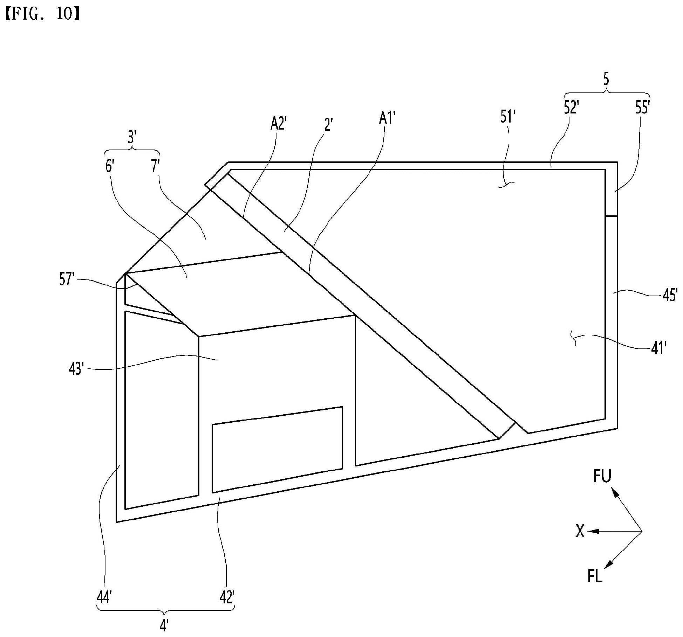

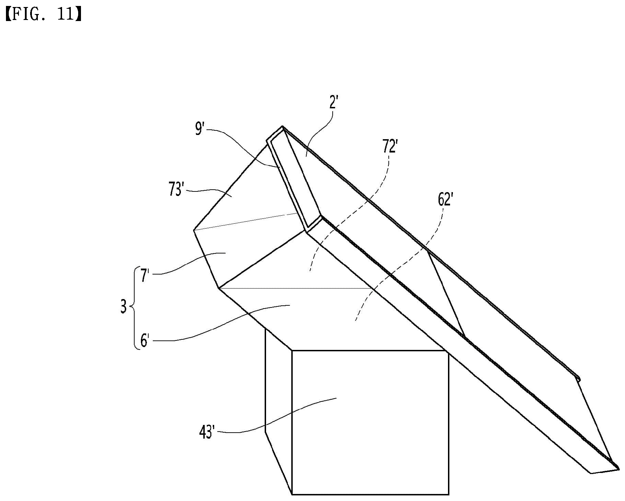

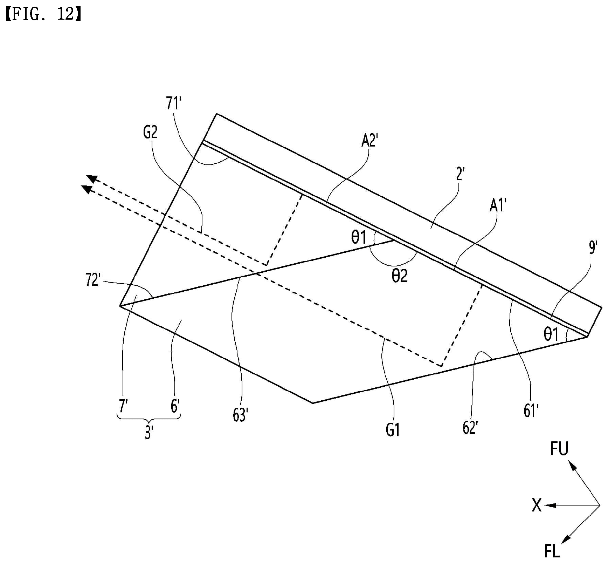

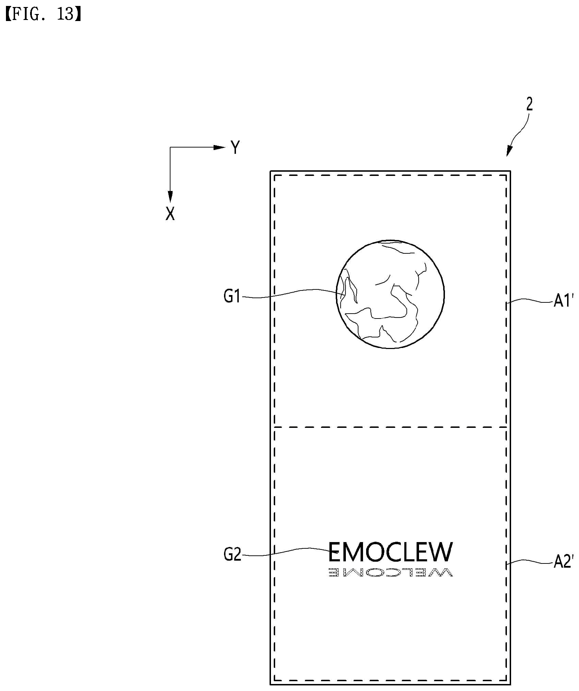

FIG. 9 is a perspective view illustrating the other example of a display apparatus according to the present embodiment, FIG. 10 is a cross-sectional view illustrating the other example of a display apparatus according to the present embodiment, FIG. 11 is a perspective view illustrating a display unit and a prism of the other example of a display apparatus according to the present embodiment, FIG. 12 is a view illustrating an optical path of the other example of a display apparatus according to the present embodiment, and FIG. 13 is a bottom view illustrating an emission surface of the display unit shown in FIG. 12.

The other example of the display apparatus may include a housing 1', a display unit 2', and a prism 3'.

The housing 1' may form an exterior appearance of the other example of the display apparatus. The housing 1' may be disposed outside the display unit 2' and the prism 3'. The housing 1' can protect the display unit 2' and the prism 3'.

The housing 1' may be configured as an assembly of a plurality of members.

The housing 1' may include a lower housing 4' and an upper housing 5' disposed above the lower housing 4'.

A lower space 41' may be formed inside the lower housing 4'.

The lower housing 4' may include a lower plate 42', a front body 44', and a peripheral body 45'.

An inner supporter 43' configured to support the prism 3' may be formed on the lower plate 42'. The inner supporter 43' may be formed on an upper surface of the lower plate 42'.

A power unit configured to supply power to the display unit 2' may be accommodated in the lower space 41'.

An upper space 51' may be formed inside the upper housing 5'.

The upper housing 5' may include a top cover portion 52'.

The top cover portion 52' may cover the display unit 2'.

The upper housing 5' may include a pair of side cover portions 53' and 54'.

The pair of side cover portions 53' and 54' may include a left cover portion 53' extending from a left end of the top cover portion 52' to a left side of the lower housing 4', and a right cover portion 54' extending from a right end of the top cover portion 52' to a right side of the lower housing 4'.

The upper housing 5' may further include a rear cover portion 55'.

The rear cover portion 55' may extend from a rear end of the top cover portion 52' to the peripheral body 45' of the lower housing 4'.

The upper housing 5' may include a control panel 56' on which an input unit such as a button is disposed.

An opening 57' may be formed in the upper housing 5'.

The opening 57' may be formed in the control panel 56'. The opening 57' may be opened in a forward upper direction FU at the control panel 56'.

The display unit 2' may emit an image. The display unit 2' may emit an image toward the prism 3'.

The display unit 2', as an image generation unit, may be a display device capable of generating image light by controlling electrical signals, such as an LCD (Liquid Crystal Display) or an OLED (Organic Light Emitting Diode) panel.

The display unit 2' may be disposed to be inclined inside the housing 1'. The display unit 2' may emit an image in a forward lower direction FL.

The display unit 2' may include a plurality of regions A1' and A2'. The plurality of regions A1' and A2' may be formed on an emission surface of the display unit 2'.

The emission surface may be formed on an inclined lower surface (hereinafter, referred to as a lower surface) of the display unit 2'.

The plurality of regions A1' and A2' may be divided on the emission surface of the display unit 2' in the front-rear direction X.

The plurality of regions A1' and A2' may include a first region A1' and a second region A2'.

The first region A1' may be a region facing a first prism 6' among the prisms 3'.

The second region A2' may be a region facing a second prism 7' among the prisms 3'.

The display unit 2' may emit a first image G1 to the first region A1' among the plurality of regions A1' and A2'.

The display unit 2' may emit a second image G2 to the second region A2' among the plurality of regions A1' and A2'.

The display unit 2' may emit the first image G1 through the first region A1', and may emit the second image G2 through the second region A2'.

The display unit 2' may emit the first image G1 and the second image G2 simultaneously. The display unit 2' may emit the first image G1 through the first region A1' while emitting the second image G2 through the second region A2'.

The first image G1 and the second image G2 may be identical images, or may be different images from each other.

The first image G1 and the second image G2 may respectively include different types of images, one of the first image G1 and the second image G2 may include an image such as a picture, and the other of the first image G1 and the second image G2 may include an image such as a numeral or a character.

When the first image G1 includes an image such as a picture, the second image G2 may include an image such as a numeral or a character, and when the first image G1 includes an image such as a numeral or a character, the second image G2 may include an image such as a picture.

The prism 3' may reflect the images G1, G2 emitted from the display unit 2'.

The prism 3' may be disposed at a forward lower side of the display unit 2'.

The prism 3' may have an incident surface facing the display unit 2'. The incident surface of the prism 3' may be an inclined upper surface (hereinafter, referred to as an upper surface) of the prism 3'.

The prism 3' may be provided in plural. Each of the plurality of prisms 3' may include an incident surface. Each of the plurality of prisms 3' may include an inclined surface configured to change an optical path of an image.

The plurality of prisms 3' may include a first prism 6' and a second prism 7'.

The display unit 2' may emit a plurality of images G1 and G2 along the incident surfaces 61' and 71' of the plurality of prisms 3', respectively.

The other example of the display apparatus may superimpose and display the plurality of images G1 and G2.

The first prism 6' may reflect the first image G1 emitted through the first region A1'. The first prism 6' may reflect the first image G1 emitted through the first region A1' toward the opening 57'.

The first image G1 reflected by the first prism 6' may be transmitted through the second prism 7'.

The first image G1 reflected by the first prism 6' may be transmitted through the second prism 7' and then emitted through the opening 57'.

The second prism 7' may reflect the second image G2 emitted through the second region A2'. The second prism 7' may reflect the second image G2 emitted through the second region A2' toward the opening 57'.

The display apparatus may superimpose and display the first image G1 and the second image G2.

The first image G1 reflected by the first prism 6' and the second image G2 reflected by the second prism 7' may be displayed together, and the first image G1 and the second image G2 may overlap each other.

The first prism 6' may include a first incident surface 61', a first inclined surface 62', and a second inclined surface 63'.

The first incident surface 61' may face the emission surface of the display unit 2'. The first incident surface 61' may face the first region A1' of the emission surface of the display unit 2'.

The first image G1 emitted through the first region A1' may be incident on the first incident surface 61'.

The first incident surface 61' may be an inclined upper surface (hereinafter, referred to as an upper surface) of the first prism 6'.

The first image G1 incident on the first incident surface 61' may be formed on the first inclined surface 62'.

The first inclined surface 62' may reflect the first image G1 incident on the first incident surface 61' toward the second prism 7'. The first inclined surface 62' may change an optical path. The first inclined surface 62' may change a direction of the first image G1. The first inclined surface 62' may change an optical path in the forward lower direction FL to the forward upper direction FU. The first inclined surface 62' may change the first image G1 incident in the forward lower direction FL to the forward upper direction FU.

The first inclined surface 62' may be an inclined rear surface of the first prism 6' or a lower surface of the first prism 6'.

The first inclined surface 62' and the first incident surface 61' may form an acute angle θ1.

The first image G1 reflected by the first inclined surface 62' may be emitted toward the second inclined surface 63'.

The second inclined surface 63' and the first incident surface 61' may form an obtuse angle θ2.

The first inclined surface 62' and the second inclined surface 63' may be spaced apart from each other. The first inclined surface 62' and the second inclined surface 63' may be spaced apart in the forward upper direction FU.

The other example of the display apparatus can provide a sense of depth corresponding to a distance by which the first inclined surface 62' and the second inclined surface 63' are spaced apart.

The first inclined surface 62' and the second inclined surface 63' may be parallel to each other. The first inclined surface 62' and the second inclined surface 63' may be inclined at the same angle.

The second inclined surface 63' may be an inclined front surface of the first prism 6' or an inclined upper surface of the first prism 6'.

The second prism 7' may include a second incident surface 71', a third inclined surface 72', and an emission surface 73'.

The second incident surface 71' may face the emission surface of the display unit 2'. The second incident surface 71' may face the second region A2' of the emission surface of the display unit 2'.

The second image G2 emitted through the second region A2' may be incident on the second incident surface 71'.

The second incident surface 71' may be an inclined upper surface (hereinafter, referred to as an upper surface) of the second prism 7'.

The second image G2 incident on the second incident surface 71' may be formed on the third inclined surface 72'.

The third inclined surface 72' may reflect the second image G2 incident on the second incident surface 71'. The third inclined surface 72' may change an optical path. The third inclined surface 72' may change a direction of the second image G2. The third inclined surface 72' may change an optical path in the forward lower direction FL to the forward upper direction FU. The third inclined surface 72' may change the second image G2 incident in the forward lower direction FL to the forward upper direction FU.

The third inclined surface 72' may be an inclined rear surface of the second prism 7' or a lower surface of the second prism 7'.

The third inclined surface 72' may be parallel to the first inclined surface 62'. The third inclined surface 72' may be parallel to the second inclined surface 63'. The third inclined surface 72' and the second inclined surface 63' may be inclined at the same angle.

The third inclined surface 72' may overlap the first inclined surface 62' in an inclined direction of the forward upper side FU.

A height of the third inclined surface 72' may be different from a height of the first inclined surface 62'. The height of the third inclined surface 72' may be higher than the height of the first inclined surface 62'.

The third inclined surface 72' and the first inclined surface 62' may be spaced apart from each other in the up-down direction. At least a portion of the third inclined surface 72' may be located above the first inclined surface 62'.

Each of the third inclined surface 72' and the first inclined surface 62' may include an overlap region overlapping in the up-down direction.

The third inclined surface 72' may include an overlap region overlapping the first inclined surface 62' in the up-down direction, and a non-overlap region not overlapping the first inclined surface 62' in the up-down direction.

The first inclined surface 62' may include an overlap region overlapping the third inclined surface 72' in the up-down direction, and a non-overlap region not overlapping the third inclined surface 72' in the up-down direction.

The third inclined surface 72' may be integrated with the second inclined surface 63'.

The third inclined surface 72' and the second incident surface 71' may form an acute angle θ1.

The second image G2 reflected by the third inclined surface 72' may be emitted toward the emission surface 73'.

The emission surface 73' and the second incident surface 71' may be orthogonal to each other.

The emission surface 73' and the third inclined surface 72' may be spaced apart from each other. The emission surface 73' and the third inclined surface 72' may be spaced apart in the forward upper direction FU.

The acute angle θ1 may be 40° to 50°. A preferred example of the acute angle θ1 may be 45°.

The third inclined surface 72' may be a reflection surface configured to reflect the second image G2 in the forward upper direction, and may be a transmission surface through which the first image G1 is transmitted.

The third inclined surface 72' may be a reflection and transmission surface.

The second image G2 in the forward lower direction FL may be reflected in the forward upper direction FU by the reflection and transmission surface.

The first image G1 in the forward upper direction FU may be transmitted through the reflection and transmission surface.

When the acute angle θ1 is 45°, a transmittance of the third inclined surface 72' may be 40% to 50%.

When the acute angle θ1 is 45°, a light absorptance of the third inclined surface 72' may be less than 10%.

When the acute angle θ1 is 45°, a polarization deviation of the third inclined surface 72' may be less than 6%.

Visible light having a wavelength of 430 to 670 nm may be transmitted through the third inclined surface 72'.

That is, the first image G1 reflected by the first inclined surface 62' may be transmitted through the second inclined surface 63' and the third inclined surface 72'.

The second image G2 reflected by the third inclined surface 72' and the first image G1 transmitted through the second inclined surface 63' and the third inclined surface 72' may be emitted together toward the emission surface 73'.

The second prism 7' may include a prism body and a deposition layer, like the second prism 7 of the one example of the display apparatus, and the deposition layer may be deposited on the prism body.

The first prism 6' and the second prism 7' may be bonded. The first prism 6' and the second prism 7' may be bonded by an optical bond, like the first prism 6 and the second prism 7 of the one example of the display apparatus.

An example of the bond may be an optical bond, like the one example of the display apparatus, and hereinafter, a detailed description thereof will be omitted to avoid duplicate description.

The other example of the display apparatus may further include a damping member 9'.

The damping member 9' may cover the display unit 2'. The damping member 9' may cover the display unit 2' from below the display unit 2'.

The damping member 9' may be transparent. An example of the damping member 9' may be a transparent film or a transparent plastic injection-molded product.

The first image G1 emitted from the display unit 2' may be transmitted through the damping member 9' and then may be incident on the first incident surface 61'.

The second image G2 emitted from the display unit 2' may be transmitted through the damping member 9' and then may be incident on the second incident surface 71'.

The display unit 2' may be seated on the damping member 9'.

The damping member 9' may be a seating member on which the display unit 2' is seated.

The display unit 2' of the other example of the display apparatus may emit the first image G1 and the second image G2 together along the incident surfaces of the plurality of prisms 3'.

As shown in FIG. 13, the display unit 2' may include a first region A1' located rearward among the emission surface, and a second region A2' located forward of the first region A1'.

A distance between the second region A2' and the opening 57' may be shorter than a distance between the first region A1' and the opening 57'.

As shown in FIG. 13, the display unit 2' may emit the first image G1 through the first region A1', and may emit the second image G2 through the second region A2'.

The first image G1 emitted through the first region A1' of the display unit 2' may be incident on the first prism 6' and may be formed on the first inclined surface 62', and the second image G2 emitted through the second region A2' of the display unit 2' may be incident on the second prism 7' and may be formed on the third inclined surface 72' of the second prism 7'.

The first image G1 formed on the first inclined surface 62' of the first prism 6' may be left-right inverted with respect to the first image G1 emitted to the first region A1' of the display unit 2'.

The second image G2 formed on the third inclined surface 72' of the second prism 7' may be left-right inverted with respect to the second image G2 emitted to the second region A2' of the display unit 2'.

In consideration that the first image G1 and the second image G2 are left-right inverted, the display unit 2' may display each of the first image G1 and the second image G2 by left-right inverting the same, as shown in FIG. 13.

The first image G1 formed on the first inclined surface 62' of the first prism 6' and the second image G2 formed on the third inclined surface 72' of the second prism 7' may be displayed to overlap forward, and may be displayed like one image, like the example of the display apparatus.

An occupant can view an image in which the first image G1 and the second image G2 are superimposed through the second prism 7'.

The display unit 2' may control an intensity (luminance) of a light source for each region A1' and A2', and can control each of a luminance of the first image G1 reflected by the first inclined surface 62' and a luminance of the second image G2 reflected by the third inclined surface 72' of the second prism 7'.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being comprised in the scope of rights of the present disclosure.

## Claims

1. A display apparatus, comprising:
a display unit configured to emit a first image to a first region among a plurality of regions, and emit a second image to a second region among the plurality of regions;
a first prism configured to reflect the first image emitted through the first region; and
a second prism configured to reflect the second image emitted through the second region, and through which the first image reflected by the first prism is transmitted,
wherein the first image and the second image are superimposed and displayed.

2. The display apparatus according to claim 1,
wherein the first prism comprises:
a first incident surface through which the first image emitted through the first region is incident;
a first inclined surface configured to reflect the first image incident through the first incident surface toward the second prism; and
a second inclined surface through which the first image reflected by the first inclined surface is emitted.

3. The display apparatus according to claim 2,
wherein the first inclined surface and the second inclined surface are spaced apart from each other.

4. The display apparatus according to claim 2,
wherein the first inclined surface and the second inclined surface are parallel to each other.

5. The display apparatus according to claim 2,
wherein an angle between the first inclined surface and the first incident surface is an acute angle.

6. The display apparatus according to claim 2,
wherein an angle between the second inclined surface and the first incident surface is an obtuse angle.

7. The display apparatus according to claim 2,
wherein the second prism comprises:
a second incident surface through which the second image emitted through the second region is incident;
a third inclined surface configured to reflect the second image incident through the second incident surface, and through which the first image reflected by the first inclined surface is transmitted; and
an emission surface through which the second image reflected by the third inclined surface and the first image transmitted through the second inclined surface are emitted.

8. The display apparatus according to claim 7,
wherein the third inclined surface is parallel to the first inclined surface.

9. The display apparatus according to claim 7,
wherein an angle between the third inclined surface and the second incident surface is an acute angle.

10. The display apparatus according to claim 9,
wherein the acute angle is 40° to 50°, and
a transmittance of the third inclined surface is 40% to 50%.

11. The display apparatus according to claim 9,
wherein the acute angle is 40° to 50°, and
a light absorptance of the third inclined surface is less than 10%.

12. The display apparatus according to claim 9,
wherein the acute angle is 40° to 50°, and
a polarization deviation of the third inclined surface is less than 6%.

13. The display apparatus according to claim 7,
wherein the second inclined surface and the third inclined surface are bonded by a bond.

14. The display apparatus according to claim 13,
wherein a refractive index of the bond is 1.46 to 1.56.

15. The display apparatus according to claim 1, further comprising
a damping member configured to cover the display unit and on which the first prism and the second prism are seated.
